# EUROPEAN PATENT APPLICATION

(11) **EP 2 218 600 A2**
(43) Date of publication of application: **18.08.2010**
(21) Application number: 10396001.9
(22) Date of filing: 16.02.2010
(51) Int. Cl.: B60J 5/06, B60J 7/16

(54) **Door mechanism for the cargo box of a truck or trailer**

(30) Priority: 16.02.2009 FI 20090056
(71) Applicant: Vak Oy, 21310 Vahto (FI)
(72) Inventor: Virtanen, Lassi, 21310 Vahto (FI)
(74) Representative: Pirhonen, Kari Lennart

(57) **Abstract**

A door mechanism in the cargo body (10) of a lorry or trailer having a folding door (21) that can be opened in the lateral direction, a carrier track (27) and door carrier pieces (28) at the upper edge of the door opening. By means of the door mechanism, the opening to be opened in the side wall of the cargo body can be enlarged for loading and/or unloading of the cargo body. The edge of the cargo body ceiling (25) opposite to the door opening has a hinge (30), and a lifting member (31) is arranged to lift up the edge of the cargo body ceiling on the door opening side so that the folding doors (21) and their carrier members (27, 28) simultaneously rise upwards and increase the height of the opening for loading and/or unloading cargo at the door opening.

## Description

### OBJECT OF THE INVENTION

The object of the invention is a door mechanism in the cargo body of a lorry or trailer, comprising at least one door which opens sideways, such as a sliding door or a folding door, with carrier members, such as a door carrier track and carrier pieces for one or more doors moving on and being supported by it, in the vicinity of the upper edge of the door opening.

### PRIOR ART

Doors that swing open, are foldable or can be moved to the side are often used in the cargo body of a lorry or a trailer to provide an opening in the cargo body wall for loading cargo. When located in the back of a cargo body, the door generally consists of two pieces, both halves of which can easily be opened by means of hinges at the back corners of the cargo body so that the entire back wall of the cargo body opens up. Thus even cargo of great height can be loaded into the cargo body by a lift truck. The piece of cargo can even be nearly as high as the internal height of the cargo body. The problem with loading a cargo body from behind, however, is that it is difficult to move the cargo from the back door to the front of the cargo body. For that reason, often one side of the cargo body can also be opened.

The possibility to open a side wall of the cargo body of a lorry or trailer makes the situation different. A cargo body side wall is generally so long that several doors are required. If vertical posts could be used in the middle of the side wall, the doors could be hinged onto them, but often it is required that the entire cargo body side can be opened in its entirety, without any vertical posts hindering loading and unloading. For instance, doors that can be folded, like an accordion, to both sides of the cargo body side wall opening are often used in such cases, with door panels that fold together and are hinged onto one another. A structure composed of several door panels becomes so heavy, however, that when folded to both sides, the doors must be supported separately. In a commonly used structure, there is a carrier track attached below the cargo body ceiling, above the upper edge of the side door opening, on which the folding doors opening to the side are supported. The doors have carrier pieces attached to them, which move on the carrier track, usually supported by rollers. A carrier piece attached to a folding door moves to the side, supported on the carrier track, when the door is opened.

A benefit of a cargo body side wall that can be opened in its entirety is the possibility to easily load and unload the cargo from the side along the entire length of the cargo body using a lift truck. A common problem, however, is that, even though the cargo can be loaded and unloaded along the entire length of the cargo body, this is not possible for the entire height of the cargo body. This is because the carrier track required for the opening mechanism of a foldable door and the carrier pieces supported on the carrier track are located at the upper edge of the door opening. They take up a major proportion of the door opening up to the side and thus obstruct loading, making it impossible to use the entire space up to the ceiling, and similarly also during unloading. A sizeable empty space can thus remain between the cargo body ceiling and the loaded cargo. This means wasted space with a potentially significant financial impact due to lower payload.

### OBJECT OF THE INVENTION

The object of the invention is a door mechanism in the cargo body of a lorry or trailer, by means of which the cargo body can be loaded and/or unloaded significantly more efficiently than by known means. The object of the invention is furthermore a door mechanism in the cargo body of a lorry or trailer, by means of which the cargo body can essentially be loaded along its entire height, i.e. up to the cargo body ceiling if so required, and by means of which a cargo body so loaded can also be easily unloaded. With this invention, loading and unloading can thus easily be carried out from the side of the cargo body using a lift truck, for instance.

### CHARACTERISTICS OF THE INVENTION

A cargo body door mechanism according to the invention is characterised in that, in this door mechanism, a lifting device, such as a hydraulic cylinder or a corresponding mechanical lifting device is attached to the door carrier track, and, by means of the lifting device, the carrier track can be lifted upwards so that the free loading height of the door opening increases.

Loading and unloading of the cargo body is made substantially easier when the carrier track, located in the vicinity of the upper edge of the door opening and taking up a portion of the door opening, can be lifted up, away from the door opening.

### EMBODIMENTS OF THE INVENTION

A preferred embodiment of the cargo body door mechanism according to the invention is characterised in that
a door mechanism lifting device is provided to lift up the carrier track, door carrier pieces and doors so that the free loading height of the cargo body door opening corresponds the internal height of the cargo body.

Another preferred embodiment of the cargo body door mechanism according to the invention is characterised in that
- a door mechanism carrier track is attached to the ceiling of the cargo body, the ceiling having a hinge at the side opposite to the door opening, by means of which hinge the cargo body ceiling edge on the door opening side can be lifted up,
- a lifting device is provided to lift up the carrier track and the front edge of the cargo body ceiling.

As the cargo body ceiling edge on the door opening side lifts upwards, the carrier track at the upper edge of the door opening and door carrier pieces attached to the carrier track rise upwards, essentially to the level of the cargo body ceiling or above it. This clearance of obstacles increases the height of the opening available for loading and/or unloading of cargo at the door opening, whereby loads of considerable height, reaching nearly to the ceiling of the cargo body, can easily be loaded into the cargo body.

A third preferred embodiment of the cargo body door mechanism according to the invention is characterised in that a lifting member of the door mechanism is arranged to jointly lift up the carrier track of the door mechanism, the front edge of the cargo body ceiling, the door carrier pieces and the doors.

A fourth preferred embodiment of the cargo body door mechanism according to the invention is characterised in that the cargo body door mechanism includes one lifting member in the front portion of the cargo body and another lifting member in the back portion of the cargo body, the lifting members being jointly arranged to lift up the carrier track of the door mechanism, the front edge of the cargo body ceiling, the door carrier pieces and the doors.

### EXAMPLES OF EMBODIMENTS

In the following, the invention is described using examples with reference to the appended drawings, in which

### LIST OF FIGURES

- Figure 1: is a side view of a cargo body according to the invention, with the cargo body side door partially open.
- Figure 2: corresponds to Fig. 1 and shows the cargo body side door completely open.
- Figure 3: is a cross-sectional view of Fig. 2 along the line III-III.
- Figure 4: is a cross-sectional view of Fig. 2 along line IV-IV.
- Figure 5: corresponds to Fig. 4 and shows the cargo body door mechanism in another position.
- Figure 6: is a horizontal cross-sectional view of a detail of the cargo body door mechanism.

### DESCRIPTION OF THE FIGURES

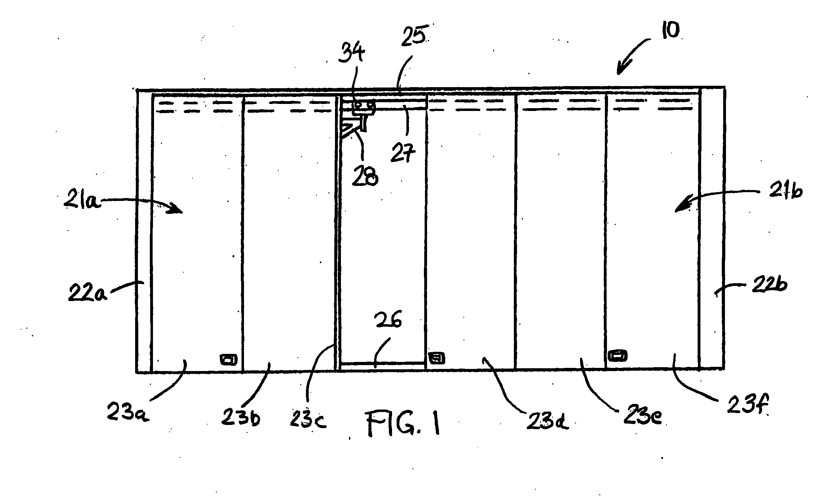

Figure 1 shows a side view of a cargo body 10 according to the invention. An opening for loading and/or unloading is arranged in the side wall of the cargo body 10 so that nearly the entire side wall of the cargo body 10 can be opened. This opening in the side wall can be closed with two folding doors 21 a and 21 b, attached to corner posts 22a and 22b of the cargo body 10, both doors comprising three door panels 23a, 23b and 23c, and 23d, 23e, 23f, hinged to one another.

Fig. 1 is laid out so as to show one door panel 23c of the left-side folding door 21 a in the cargo body 10 open, whereby the ceiling 25 and the floor 26 of the cargo body 10 can be seen through the opening. Fig. 1 also shows that the upper edge of the door opening comprises a carrier track 27, on which the folding door 21 a is supported by means of a carrier piece 28 equipped with rollers 34. Fig. 1 further shows the right-side folding door 21 b of the cargo body 10 also supported on the carrier track 27, but its carrier member remains hidden behind the door 21 b in Fig. 1.

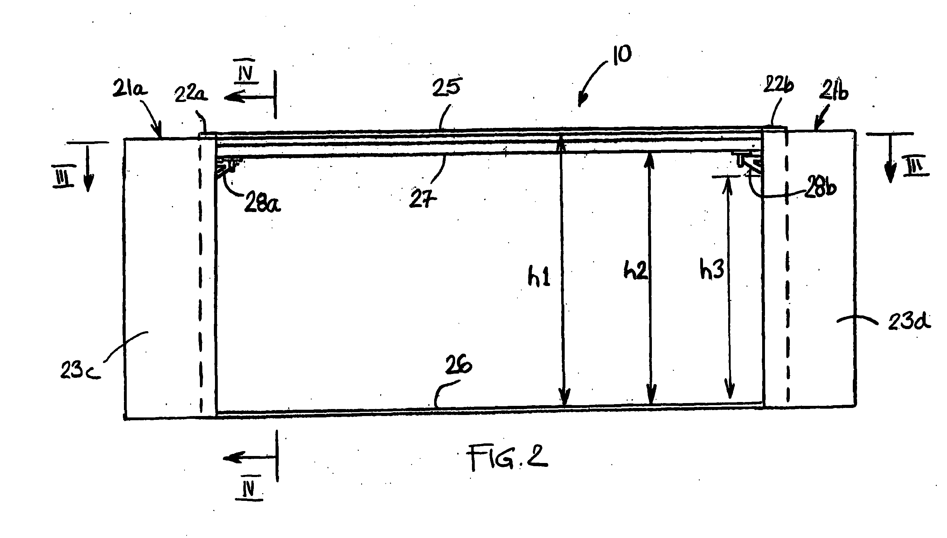

Figure 2 shows both folding doors 21 a and 21 b of the cargo body 10 completely open and folded to the sides of the cargo body 10, whereby in Fig. 2 only the door panels 23c and 23d of the folding doors 21 a and 21 b are visible. Fig. 2 also clearly shows the carrier track 27 at the upper edge of the opening for loading and/or unloading cargo, on which track the folding doors 21 a and 21 b are supported by means of the carrier pieces 28a and 28b. In this example, the carrier track 27 has been attached to the ceiling 25 of the cargo body 10, below the ceiling surface.

Fig. 2 clearly shows the drawback of known door mechanisms: even though the carrier track 27 is close to the ceiling 25 of the cargo body 10, the carrier track 27 attached to the ceiling 25 of the cargo body 10 is still located substantially below the ceiling 25. This makes it impossible to load the cargo body 10 from the side using a lift truck so as to fill up the cargo body 10 up to the ceiling. To illustrate this drawback, Fig. 2 shows the internal height of the cargo body 10 from the floor 26 to the ceiling 25, indicated by the reference number h1. The distance of the carrier track 27 of the door mechanism from the floor h2 is significantly shorter than the internal height h1 of the cargo body 10.

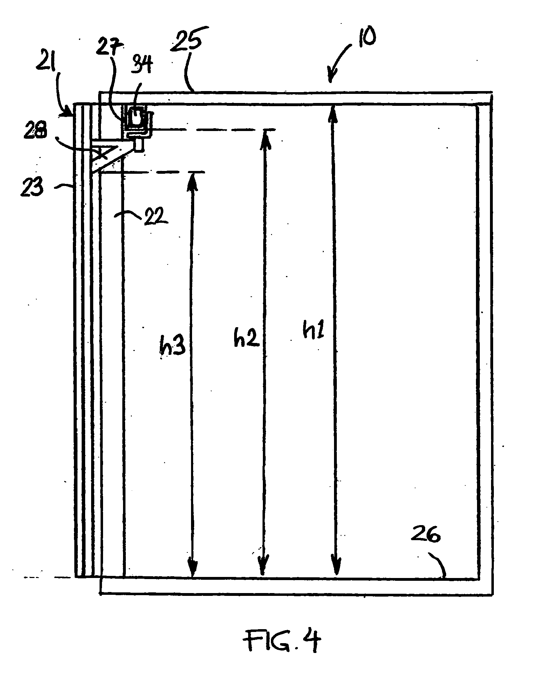

Fig. 2 furthermore shows that also the carrier pieces 28a and 28b of the folding doors 21 a and 21 b, located even lower than the carrier track 27, obstruct loading of the cargo body 10. The distance of the carrier pieces 28a and 28b from the floor 26 of the cargo body 10 is indicated by the reference number h3. The obstructions to the loading height are clearly illustrated also in Fig. 4.

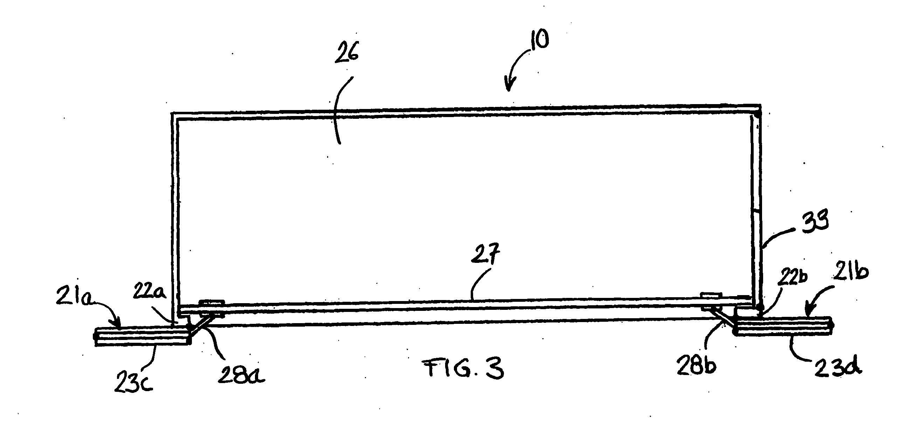

Figure 3 is a view from the top of Fig. 2, below the ceiling of the cargo body 10. As shown in Fig. 3, the cargo body 10 comprises back doors 34, which are closed. Instead, both folding doors 21 a and 21 b attached to the corner posts 22a and 22b of the cargo body 10 are open and folded to the sides of the cargo body 10. This figure also clearly shows the carrier track 27 of the folding doors 21 a and 21 b, which obstructs loading and unloading carried out from the side.

The cross section of the cargo body 10 shown in Figure 4 illustrates that the carrier track 27 of the folding doors 21 a and 21 b, and the carrier pieces 28 are clearly below the ceiling 25 of the cargo body 10. They thus effectively prevent loading the cargo body 10 up to the ceiling 25 from the side using a lift truck. Similarly, unloading cargo is also more difficult. In this case, the largest possible loading height of the cargo body 10 as shown in Fig. 4 is the distance h2 of the carrier track 27 from the floor 26. At those locations in the door opening of the cargo body 10 where also the carrier pieces 28 of the folding doors 21 are visible the largest possible loading height is the distance h3 of the carrier pieces 28 from the floor 26. Accordingly, the space of the cargo body 10 above the said obstructions is usually left empty. Such inefficient payload usage can in some cases obviously have a great financial impact.

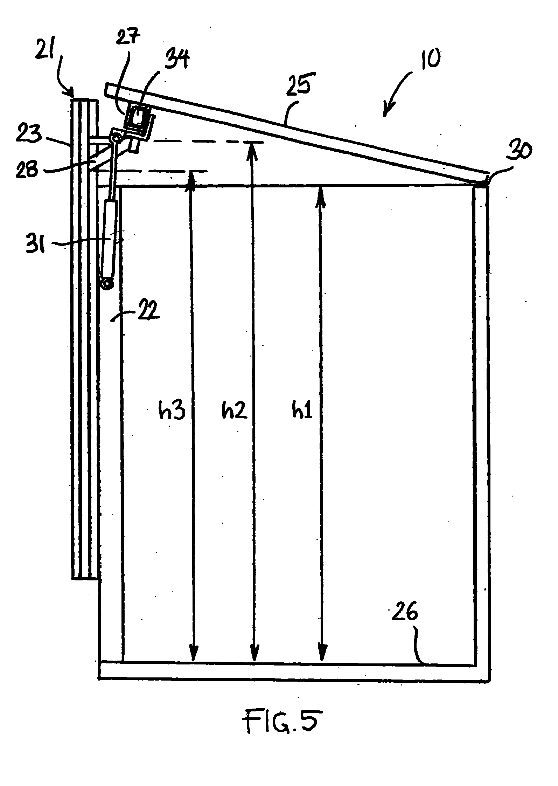

Figure 5 shows the door mechanism of a cargo body 10 according to the invention wherein the carrier track 27 of the doors 21 has been lifted up by means of a hydraulic cylinder 31 located inside a corner post 22 of the cargo body 10 or in its vicinity, on the outside. Instead of the hydraulic cylinder 31 other mechanical lifting members can also naturally be used, such as a chain and a rotating chain wheel, or a wire rope and pulley, for instance. By means of the lifting motion of the hydraulic cylinder 31, the carrier members incorporated in the door mechanism of the cargo body 10, including the carrier track 27 and the door carrier pieces 28, and the folding doors 21, all jointly rise upwards. As shown in Fig. 5, both the distance h2 of the carrier track 27 from the floor 26 and the distance h3 of the carrier pieces 28 of the doors 21 from the floor 26 are greater than the internal height h1 of the cargo body 10. As a result, the cargo body 10 can be loaded without obstructions from the side across its entire height; in other words, the loading height is close to h1.

According to the example shown in Fig. 5, the door mechanism of the cargo body 10 presented above functions by equipping the edge of the ceiling 25 of the cargo body 10 opposite to the door opening with a hinge 30. Thus the edge of the ceiling 25 on the door opening side can be lifted up. As the carrier track 27 of the doors has been attached to the underside of the ceiling 25 of the cargo body 10 in the door mechanism, the front edge of the ceiling 25 is lifted upwards simultaneously when the carrier track 27 is lifted by means of the hydraulic cylinder 31. Because the carrier pieces 28 of the doors 21 have been attached to the carrier track 27, the doors 21 are also simultaneously lifted upwards.

As the carrier track 27 of the folding door 21 and the carrier piece 28 are clearly above the hinge 30 of the ceiling 25, the loading height of the door opening remains at least equal to the height h1 between the floor 26 and the ceiling 25 of the cargo body 10, and the cargo body 10 can thus be loaded from the side using a lift truck and filled up, from the floor 26 up to the ceiling 25. Fig. 5 also shows that, since the carrier track 27 is so high up during loading and unloading, there is no risk of damaging the carrier track 27 or the goods to be loaded by collision with the lift truck. This further makes loading and unloading easier and quicker.

Fig. 5 shows the most preferred embodiment of the invention, but alternatively the door structure of the cargo body 10 can also be arranged in such a way that the carrier track 27 is set apart from the ceiling 25. In that case, the carrier track 27, the carrier pieces 28 of the doors 21 and the doors 21 would lift up, while the ceiling 25 would remain in its place. This solution also allows unobstructed loading capability of the cargo body 10 from the side according to the invention so that the loading height is close to the internal height h1 of the cargo body 10.

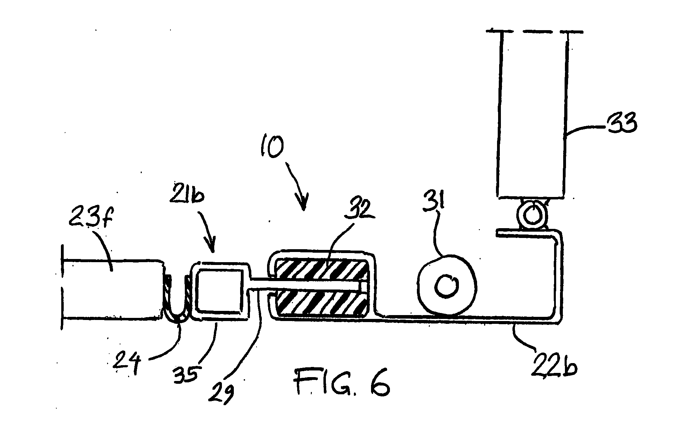

Figure 6 shows a horizontal cross-sectional view of a detail of the door mechanism of the cargo body 10 at the back corner of the cargo body 10. Fig. 6 shows a corner post 22b in the rear part of the cargo body 10, with both a back door 33 and a folding door 21 b opening to the side of the cargo body 10 attached to the corner post 22b. In the example shown in Fig. 6, the hydraulic cylinder 31 lifting the carrier track 27 of the door mechanism is located inside the corner post 22b and the lower end of the hydraulic cylinder is attached to the corner post 22b. The piston of the hydraulic cylinder 31 is attached to the carrier track 27, which is not shown in Fig. 6.

Fig. 6 shows that the folding door 21 b comprises an edge beam 35 to which a door panel 23f is attached by means of a hinge 24. A slider flange 29 is attached to the door edge beam 35, the slider flange being located between slider pieces 29 located in the corner post 22b of the cargo body 10. The slider flange 29 can move in relation to the slider pieces 29, whereby the folding door 21 b can move in relation to the corner post 22b of the cargo body 10. This motion is necessary when the carrier track 27 of the door mechanism is lifted by means of the hydraulic cylinder 31, as shown in Fig. 4, and the door carrier pieces 28 and the folding doors 21 with it, as a joint assembly.

### ADDITIONAL NOTES

It is obvious to a person skilled in the art that the different embodiments of the invention may vary within the scope of the claims presented below. Thus the invention is not limited to the embodiment shown in the drawings, where the door structure on the side of a cargo body is composed of two folding doors, each with three door panels. According to the invention, the folding door structure of the cargo body can also comprise five door panels, for instance, or any number of door panels. According to the invention, the cargo body can also have no more than one folding door carried by the carrier track. It is essential for the invention that the door carrier structures can be moved away from the door opening to increase the opening for loading and unloading. Thus it becomes substantially easier to carry out the loading and unloading of cargo, and the cargo body can be loaded and unloaded more easily and effectively. The cargo body can furthermore be loaded right up to the ceiling, which is substantially more difficult and often even impossible with known solutions. A door structure according to the invention can also be located on any side of the cargo body.

### LIST OF REFERENCE NUMBERS

- 10: Cargo body
- 21: Folding door
- 22: Corner post of the cargo body
- 23: Door panel
- 24: Door panel hinge
- 25: Ceiling
- 26: Floor
- 27: Door carrier track
- 28: Door carrier piece
- 29: Slider flange
- 30: Hinge
- 31: Hydraulic cylinder
- 32: Slider piece
- 33: Back door
- 34: Roller
- 35: Door edge beam

## Claims

1. A door mechanism in the cargo body (10) of a lorry or a trailer, said door mechanism having at least one door (21) that can be opened in the lateral direction, such as a sliding door or a folding door, with carrier members of said door, such as a door carrier track (27) and carrier pieces (28) moving on and being supported by said carrier track, being disposed in the vicinity of the upper edge of said door, **characterised in that**, in said door mechanism, at least one lifting device (31), such as a hydraulic cylinder or a corresponding mechanical lifting device, is attached to said carrier track (27), whereby said carrier track can be lifted upwards so that the free loading height of the door opening increases.

2. The door mechanism according to claim 1, **characterised in that** said lifting device (31) of said door mechanism is arranged to lift said carrier track (27), said carrier pieces (28) and said doors (21) so that the free loading height of the door opening of said cargo body (10) corresponds to the internal height (h1) of said cargo body.

3. The door mechanism according to either one of claims 1 or 2, **characterised in that**
- said carrier track (27) of said door mechanism is attached to the ceiling of said cargo body (10), wherein said ceiling has a hinge (30) at the side opposite to the door opening, by means of which hinge the cargo body ceiling edge on the door opening side can be lifted up,
- said lifting device (31) is provided to lift up said carrier track (27) and the front edge of said ceiling (25) of said cargo body (10).

4. The door mechanism according to claim 3, **characterised in that** the lifting member (31) of said door mechanism is arranged to jointly lift said carrier track (27) of said door mechanism, said front edge of said ceiling (25) of said cargo body (10), said carrier pieces (28) of said doors (21), and said doors (21).

5. The door mechanism according to any one of claims 3 or 4, **characterised in that** said door mechanism of said cargo body (10) has one lifting member (31) in the front portion of said cargo body and another lifting member (31) in the rear portion of said cargo body, said lifting members being jointly arranged to lift said carrier track (27) of said door mechanism, said front edge of said ceiling (25) of said cargo body (10), said carrier pieces (28) of said doors (21), and said doors (21).
